# EUROPEAN PATENT APPLICATION

(11) **EP 2 887 613 A1**
(43) Date of publication of application: **24.06.2015**
(21) Application number: 14199024.2
(22) Date of filing: 18.12.2014
(51) Int. Cl.: H04L 29/06, H04W 12/02, H04W 12/04

(54) **Method and apparatus for performing secure voice call**

(30) Priority: 19.12.2013 KR 20130159118
(71) Applicant: Samsung Electronics Co., Ltd, Gyeonggi-do 443-742 (KR)
(72) Inventor: Kang, Bo-Gyeong, 443-742 Gyeonggi-do (KR); Lee, Duckey, 443-742 Gyeonggi-do (KR)
(74) Representative: Nederlandsch Octrooibureau

(57) **Abstract**

A method and apparatus for performing a secure voice call is provided. The method includes generating an encryption key to be used in the secure voice call, encapsulating the encryption key using a pre-agreed upon master key, generating at least one dedicated frame including the encapsulated encryption key, transmitting the at least one dedicated frame in place of at least one voice frame generated by a vocoder to a counterpart User Equipment (UE), receiving an Acknowledgement (ACK) frame indicating successful reception of the encryption key from the counterpart UE, encrypting the at least one voice frame generated by the vocoder using the encryption key and transmitting the encrypted at least one voice frame to the counterpart UE, after receiving the ACK frame, and decrypting the at least one voice frame received from the counterpart UE using the encryption key, after receiving the ACK frame.

## Description

### BACKGROUND

### 1. Field of the Invention

The present invention relates generally to a method and apparatus for performing a secure voice call.

### 2. Description of the Related Art

Mobile communication systems divide the entire coverage into a plurality of coverage areas, that is, cells, and guarantee seamless communication of a user terminal (or a User Equipment (UE)) through Base Stations (BSs) covering the cells, respectively. The UE connects a BS serving its cell with a wireless channel, and performs communication with a counterpart UE via a mobile communication system.

For a UE desiring a voice call, a mobile communication system may use a communication channel of a voice call network, such as a 3^{rd}-Generation (3G) or 4^{th}-Generation (4G) network for voice calls, or may use a data channel for a Voice over Internet Protocol (VoIP). The VoIP may provide a secure voice call by transferring an encryption key over the Internet, whereas a voice call network of a 3G or 4G mobile communication system does not provide security for voice calls and does not allow sharing of an encryption key for voice data among UEs.

As another technique for a secure voice call, an independent hardware device may be attached to a UE to directly scramble an analog voice signal. However, according to this technique, both a transmitting terminal and a receiving terminal require the purchase and installation of expensive hardware devices, causing user inconvenience.

Accordingly, a need exists for a simple technique for performing a secure voice call over a voice call network, without being limited by a VoIP security technique.

### SUMMARY

The present invention has been made to address the above-mentioned problems and disadvantages, and to provide at least the advantages described below. Accordingly, an aspect of the present invention provides a method and apparatus for protecting voice-based communication in a communication system.

Another aspect of the present invention provides a method and apparatus for performing a secure voice call without changing a voice codec in a mobile communication system.

Another aspect of the present invention provides a method and apparatus for sharing a key for voice encryption among UEs performing a voice call.

According to an aspect of the present invention, a method of performing a secure voice call is provided. The method includes generating an encryption key to be used in the secure voice call; encapsulating the encryption key using a pre-agreed upon master key; generating at least one dedicated frame comprising the encapsulated encryption key; transmitting the at least one dedicated frame in place of at least one voice frame generated by a vocoder to a counterpart User Equipment (UE); receiving an Acknowledgement (ACK) frame indicating successful reception of the encryption key from the counterpart UE; encrypting the at least one voice frame generated by the vocoder using the encryption key and transmitting the encrypted at least one voice frame to the counterpart UE, after receiving the ACK frame; and decrypting voice frames received from the counterpart UE using the encryption key, after receiving the ACK frame.

According to another aspect of the present invention, a method of performing a secure voice call is provided. The method includes receiving at least one dedicated frame comprising an encapsulated encryption key for a secure voice call from a counterpart User Equipment (UE); extracting the encryption key by deencapsulating payloads of the at least one dedicated frame using a pre-agreed upon master key; transmitting an Acknowledgement (ACK) frame indicating successful reception of the encryption key in place of at least one voice frame generated by a vocoder to the counterpart UE; encrypting the at least one voice frame generated by the vocoder using the encryption key and transmitting the at least one encrypted voice frame to the counterpart UE, after transmitting the ACK frame; and decrypting voice frames received from the counterpart UE using the encryption key, after transmitting the ACK frame.

According to another aspect of the present invention, a UE for performing a secure voice call is provided. The UE includes a vocoder configured to generate voice frames based on a voice signal input from a user and restore a voice signal from received frames; a modem configured to transmit the voice frames to a counterpart UE and extract the received frames from a received signal; and a secure communication module configured to encapsulate an encryption key to be used for a secure voice call using a pre-agreed upon master key, generate at least one dedicated frame comprising the encapsulated encryption key, input the at least one dedicated frame, in place of at least one voice frame generated by a vocoder, to the modem, receive an Acknowledgement (ACK) frame indicating successful reception of the encryption key from the counterpart UE, encrypt the at least one voice frame generated by the vocoder using the encryption key and deliver the encrypted at least one voice frame to the counterpart UE to the modem, after receiving the ACK frame, and decrypt voice frames received from the counterpart UE using the encryption key and deliver the decrypted voice frames to the vocoder, after receiving the ACK frame.

According to another aspect of the present invention, a UE for performing a secure voice call is provided. The UE includes a modem configured to extract received frames from a received signal and transmit voice frames to a counterpart UE; a vocoder configured to restore a voice signal from the received frames and generate the voice frames based on a voice signal input from a user; and a secure communication module configured to detect one or more dedicated frames comprising an encapsulated encryption key for a secure voice call from the frames, extract the encryption key by deencapsulating payloads of the at least one dedicated frame using a pre-agreed upon master key, control the modem to transmit an Acknowledgement (ACK) frame indicating successful reception of the encryption key, in place of at least one voice frame generated by the vocoder, to the counterpart UE, encrypt the at least one voice frame generated by the vocoder using the encryption key and transmit the encrypted at least one voice frame to the counterpart UE, after transmitting the ACK frame, and decrypt voice frames received from the counterpart UE using the encryption key and deliver the decrypted voice frames to the vocoder, after transmitting the ACK frame.

According to another aspect of the present invention, a method of performing a secure voice call is provided. The method includes generating a sender key for a secure voice call; generating at least one dedicated frame comprising the sender key; transmitting the at least one dedicated frame in place of at least one voice frame generated by a vocoder to a counterpart User Equipment (UE); receiving, from the counterpart UE, an Acknowledgement (ACK) frame indicating successful reception of the encryption key and at least one dedicated frame comprising a receiver key generated by the counterpart UE; determining an encryption key to be used for the secure voice call based on the sender key and the receiver key; transmitting an ACK frame indicating successful reception of the receiver key in place of at least one voice frame generated by the vocoder to the counterpart UE; encrypting the at least one voice frame generated by the vocoder using the encryption key and transmitting the encrypted at least one voice frame to the counterpart UE, after transmitting the ACK frame; and decrypting voice frames received from the counterpart UE using the encryption key, after transmitting the ACK frame.

According to another aspect of the present invention, a method for performing a secure voice call is provided. The method includes receiving at least one dedicated frame comprising a sender key for a secure voice call from a counterpart User Equipment (UE); generating a receiver key for the secure voice call; generating at least one dedicated frame comprising the receiver key; transmitting an Acknowledgement (ACK) frame indicating successful reception of the sender key and at least one dedicated frame comprising the receiver key, in place of at least one voice frame generated by a vocoder, to the counterpart UE; receiving an ACK frame indicating successful reception of the receiver key from the counterpart UE; determining an encryption key to be used for the secure voice call based on the sender key and the receiver key; encrypting the at least one voice frame generated by the vocoder using the encryption key and transmitting the encrypted at least one voice frame to the counterpart UE, after receiving the ACK frame; and decrypting voice frames received from the counterpart UE using the encryption key, after receiving the ACK frame.

According to another aspect of the present invention, a UE for performing a secure voice call is provided. The UE includes a vocoder configured to generate voice frames based on a voice signal input from a user and restore a voice signal from received frames; a modem configured to transmit the voice frames to a counterpart UE and extract the received frames from a received signal; and a secure communication module configured to generate at least one dedicated frame comprising a sender key for a secure voice call from the counterpart UE, input the at least one dedicated frame in place of at least one voice frame generated by the vocoder to the modem, determine an encryption key to be used in the secure voice call based on the sender key and a receiver key, upon receiving an Acknowledgement (ACK) frame indicating successful reception of the encryption key and at least one dedicated frame comprising the receiver key generated by the counterpart UE from the counterpart UE, input an ACK frame indicating successful reception of the receiver key in place of at least one voice frames generated by the vocoder to the modem, encrypt at least one voice frame generated by the vocoder using the encryption key and deliver the encrypted at least one voice frame to the modem after transmitting the ACK frame, and decrypt voice frames received from the counterpart UE using the encryption key and deliver the decrypted voice frames to the vocoder, after transmitting the ACK frame.

According to another aspect of the present invention, a UE for performing a secure voice call is provided The UE includes a modem configured to extract received frames from a received signal and transmit voice frames to a counterpart UE; a vocoder configured to restore a voice signal from the received frames and generate the voice frames based on a voice signal input from a user; and a secure communication module configured to receive at least one dedicated frame comprising a sender key for a secure voice call via the modem, generate a receiver key for the secure voice call, generate at least one dedicated frame comprising the receiver key, input an Acknowledgement (ACK) frame indicating successful reception of the sender key and at least one dedicated frame comprising the receiver key, in place of at least one voice frame generated by the vocoder, to the modem, determine an encryption key to be used for the secure voice call based on the sender key and the receiver key upon receiving an ACK frame indicating successful reception of the receiver key via the modem, encrypt the at least one voice frames generated by the vocoder using the encryption key and deliver the encrypted at least one voice frame to the modem after receiving the ACK frame, and decrypt voice frames received from the counterpart UE using the encryption key and deliver the decrypted voice frames to the vocoder, after receiving the ACK frame.

### BRIEF DESCRIPTION OF THE DRAWINGS

The above and other aspects, features and advantages of the present invention will be more apparent from the following description, taken in conjunction with the accompanying drawings, in which:
FIG. 1 is a diagram illustrating a sharing of an encryption key for a secure voice call according to an embodiment of the present invention;
FIG. 2 is a diagram illustrating a sharing of an encryption key for a secure voice call according to an embodiment of the present invention;
FIG. 3 is a flowchart of a secure voice call method according to an embodiment of the present invention;
FIG. 4 is a block diagram of a UE for a secure voice call according to an embodiment of the present invention;
FIG. 5 is a block diagram of a secure communication module of FIG. 4 according to an embodiment of the present invention;
FIG. 6 is s block diagram of a UE for a secure voice call according to an embodiment of the present invention;
FIG. 7 is a block diagram of a secure communication module of FIG. 6 according to an embodiment of the present invention;
FIGs. 8A and 8B illustrate a frame sequence for a secure voice call according to an embodiment of the present invention;
FIG. 9 is a flowchart of a method of a UE transmitting an encryption key according to an embodiment of the present invention;
FIG. 10 is a flowchart of a method of a UE receiving an encryption key according to an embodiment of the present invention;
FIG. 11 illustrates a frame structure according to an embodiment of the present invention;
FIG. 12 is a flowchart of a secure voice call method according to another embodiment of the present invention;
FIG. 13 is a block diagram of a secure communication module according to an embodiment of the present invention;
FIG. 14 is a flowchart of a method of a UE initiating a secure call according to an embodiment of the present invention; and
FIG. 15 is a flowchart of a method of a UE receiving a secure voice call start request from a counterpart UE according to an embodiment of the present invention.

### DETAILED DESCRIPTION OF EMBODIMENTS OF THE PRESENT INVENTION

Embodiments of the present invention are described below with reference to the accompanying drawings. For the purposes of clarity and simplicity, detailed descriptions of well-known functions or configurations are omitted as they would unnecessarily obscure the subject matter of the present invention. Also, the terms used herein are defined according to the functions of the present invention. Thus, the terms may vary depending on users' or operators' intentions or practices. Therefore, the terms used herein should be understood based on the descriptions made herein.

Although the present invention can be modified variously and have several embodiments, some embodiments of the present invention are illustrated in the accompanying drawings and are described in the specification. However, the scope of the present invention is not limited to the embodiments described and should be construed as including all changes, equivalents, and substitutions within the spirit and scope of the present invention.

The terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

Singular expressions such as "unless explicitly indicated otherwise" or "the" may be understood as including plural expressions. For example, "component surface" may include one or more component surfaces.

Although ordinal numbers such as "first", "second", and so forth will be used to describe various components, those components are not limited by the terms. For example, the terms do not limit the order and/or importance of the components. The terms are used for distinguishing one component from another component. For example, a first user device and a second user device are both user devices, and indicate different user devices. Also, a first component may be referred to as a second component and likewise, a second component may also be referred to as a first component, without departing from the teaching of the present invention.

Terms used in an embodiment of the present invention are intended to describe the embodiment, rather than to limit the embodiment. As used herein, the singular forms are intended to include the plural forms as well, unless the context clearly indicates otherwise. Terms "include" or "may include" used in an embodiment of the present invention indicate an existence of disclosed function, operation, or element, but do not limit an existence of one or more other functions, operations, or elements. Terms "include" or "has" used in the present invention should be understood to indicate an existence of a feature, number, step, operation, element, item or any combination thereof, disclosed in the specification, but should not be understood to exclude an existence of one or more other features, numbers, steps, operations, elements, or any combination thereof or possibility of adding those things.

Unless otherwise defined, all terms (including technical and scientific terms) used herein have the same meaning as commonly understood by one of ordinary skill in the art to which embodiments of the present invention belong. It will be further understood that terms, such as those defined in commonly used dictionaries, should be interpreted as having a meaning that is consistent with their meaning in the specification with the context of the relevant art as understood by the artisan at the time of invention and will not be interpreted in an idealized or overly formal sense unless expressly so defined herein.

In the embodiments of the present invention described below, an encryption key for use in encryption of a voice call is shared among user terminals (or User Equipments (UEs)) which are to perform the voice call. A UE delivers a dedicated frame including the encryption key, in place of at least one voice frame to be transmitted, to a counterpart UE. The counterpart UE notifies the UE of successful reception of the dedicated frame including the encryption key for a secure voice call, and starts transmitting a voice frame encrypted using the encryption key.

In the figures, like reference numerals will be understood to refer to like parts, components, and structures.

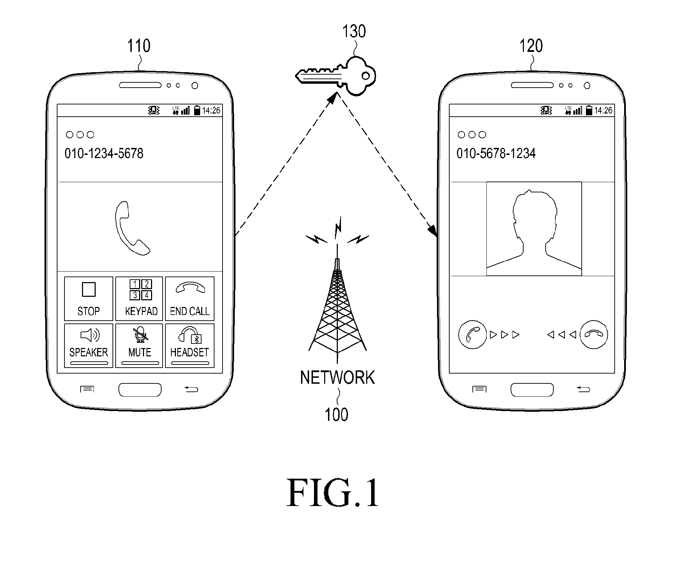

FIG. 1 is a diagram illustrating a sharing of an encryption key 130 for a secure voice call according to an embodiment of the present invention.

Referring to FIG. 1, upon starting a voice call, a UE 110 delivers an encryption key 130 for use in a secure voice call to a counterpart UE 120 over a network 100. After a channel for the voice call is allocated, the encryption key 130 is delivered to the counterpart UE 120 via at least one dedicated frame substituting for at least one voice frame including voice data. For stable sharing of the encryption key 130 between the UE 110 and the counterpart UE 120, only a few dedicated frames are needed, such that a user may hardly notice degradation in the quality of the voice call. The encryption key 130 is transmitted after encapsulated using a master key that is interpretable by only the UE 110 and the counterpart UE 120 performing the voice call.

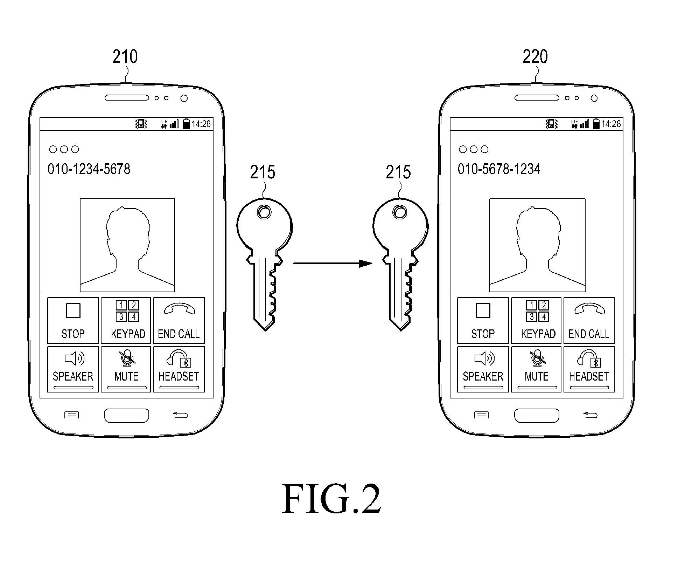

FIG. 2 is a diagram illustrating a sharing of an encryption key 215 for a secure voice call according to another embodiment of the present invention.

Referring to FIG. 2, a UE 210 delivers an encryption key 215 to be used for a secure voice call to a counterpart UE 220 via a network during a voice call. The encryption key 215 is delivered to the counterpart UE 220 via at least one dedicated frame substituting for at least one voice frame of the voice call. For stable sharing of the encryption key 215 between the UEs 210 and the counterpart UE 220, only a few dedicated frames are needed, such that a user may hardly notice degradation in the quality of the voice call. The encryption key 215 is transmitted after being encapsulated using a master key that is interpretable by only the UE 210 and the counterpart UE 220 performing the voice call.

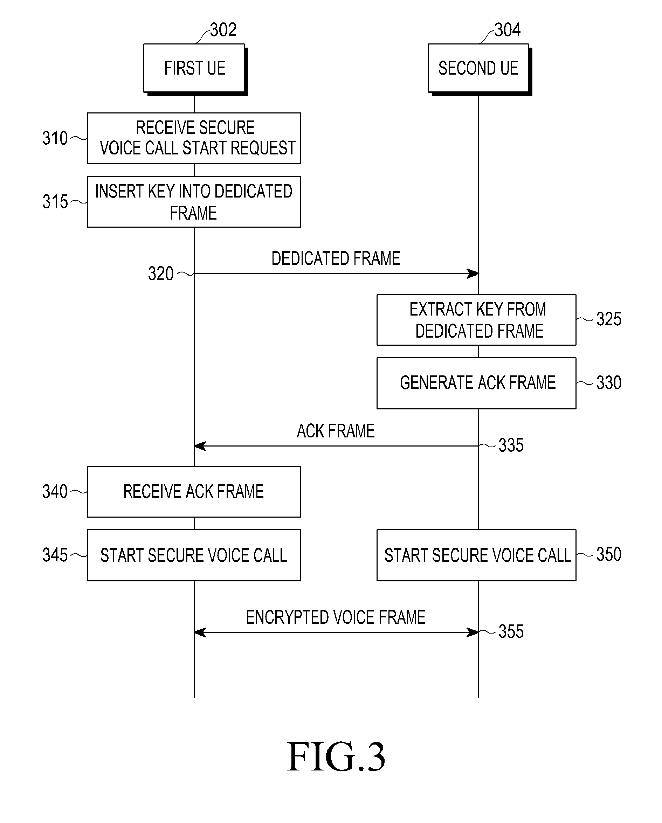

FIG. 3 is a flowchart of a secure voice call method according to an embodiment of the present invention, in which one-pass-based key transmission is used which encapsulates an encryption key using a public key (that is, a master key) of a counterpart UE. In FIG. 3, a first UE 302 initiates a secure voice call and transmits an encryption key, and a second UE 304 desires to perform or is performing a voice call with the first UE 302 and receives the encryption key.

Referring to FIG. 3, in step 310, the first UE 302 receives a secure voice call start request for starting a secure voice call from a user. In an embodiment of the present invention, the user may input a request for starting a voice call based on a secure voice call via a User Interface (UI). In another embodiment of the present invention, the user may request switching to a secure voice call during a voice call via the UI of the first UE 302.

In step 315, the first UE 302 generates an encryption key S to be used for a secure voice call, and encapsulates the encryption key S using a master key defined according to a predetermined algorithm or an algorithm agreed upon in advance with the second UE 304. In an embodiment of the present invention, the encryption key is generated at random. In an embodiment of the present invention, the master key is determined by a Public Key Infrastructure (PKI), an identifier (ID), or a phone number of the second UE 304. In step 315, the first UE 302 generates a dedicated frame including the encapsulated encryption key. In this case, if the size of the encapsulated encryption key is greater than that of a payload of one frame, one or more dedicated frames are generated.

The dedicated frame has the same frame format as the voice frame used for the voice call and includes, in the payload, at least a part of the encapsulated encryption key in place of voice data. For example, if Adaptive Multi-Rate (AMR) Narrow Band (NB) 12.2 Kbps is used as a voice codec for the voice call, the size of one frame is 31 bytes, among which the size of payload data is 244 bits. If the master key is generated based on a Rivest Shamir Adleman (RSA) public key of 1024 bits, at least five frames are needed for transmission of the encapsulated encryption key.

In step 320, the first UE 302 transmits the generated one or more dedicated frames to the second UE 304. The dedicated frames are transmitted in place of voice frames via the voice channel allocated in advance. In an embodiment of the present invention, the first UE 302 transmits the one or more dedicated frames repetitively a predetermined number of times. In an embodiment of the present invention, the one or more dedicated frames are repetitively transmitted in a predetermined time limit.

In step 325, the second UE 304 receives the one or more dedicated frames to extract the encapsulated encryption key from the received dedicated frames, and deencapsulates the encapsulated encryption key using a known master key, thereby obtaining the encryption key for use in the secure voice call. In step 330, the second UE 304 generates an Acknowledgement (ACK) frame in a predetermined format to inform the first UE 302 of obtaining of the encryption key. In step 335, the second UE 304 transmits the ACK frame in place of a voice frame via the voice channel allocated in advance. Likewise, for stable transmission, the ACK frame may be transmitted repetitively a predetermined number of times or in a predetermined time limit. In an embodiment of the present invention, the ACK frame has the same frame format as the voice frame used for the voice call, and includes a predetermined value, in place of the voice data, in the payload. For example, the payload of the ACK frame may include 244 zero ("0") bits.

The first UE 302 confirms that the at least one frame received from the second UE 304 is an ACK frame in step 340, and determines to start the secure voice call in step 345. In step 355, the first UE 302 encrypts voice frames using the encryption key and transmits the encrypted voice frames. Similarly, the second UE 304 determines to start the secure voice call after transmitting the ACK frame in step 350, and encrypts voice frames using the encryption key and transmits the encrypted voice frames in step 355. Thus, in step 355, the secure voice call is achieved between the first UE 302 and the second UE 304.

The dedicated frame and the ACK frame used to support the secure voice call include a frame type and a payload, like voice data used for a normal voice call. The frame type is 4 bits, and indicates a voice codec used in the generation of voice data included in the subsequent payload, for example, AMR, an Enhanced Full Rate (EFR), or a bit rate, or indicates whether an encryption key or ACK is included in the subsequent payload. In an embodiment of the present invention, the dedicated frame includes a predetermined word in a pre-agreed position in the payload.

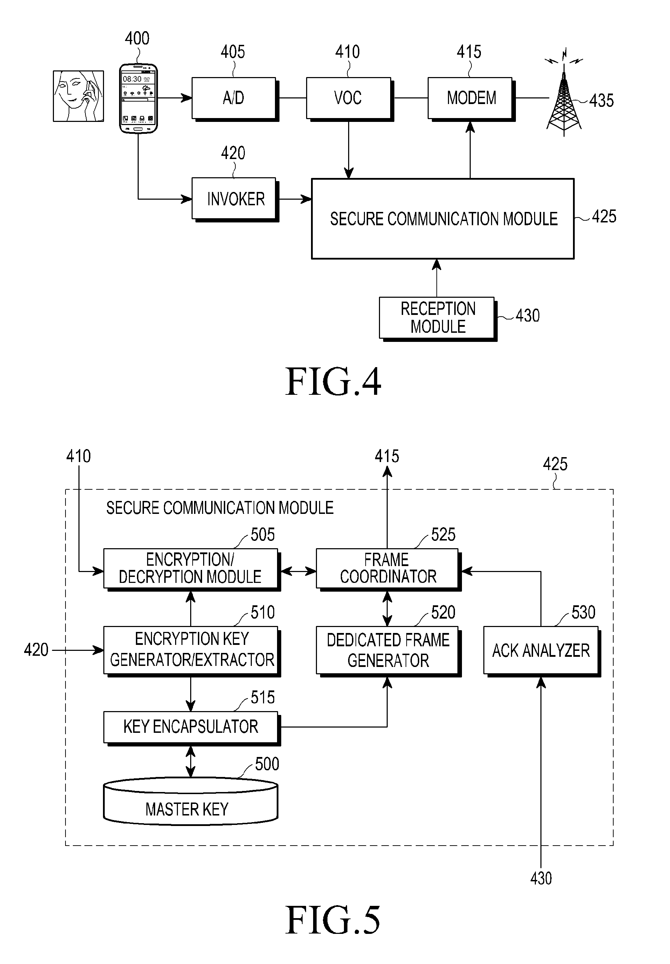

FIG. 4 is a block diagram of a UE for a secure voice call according to an embodiment of the present invention, in which a UE 400 initiating a secure voice call performs key encapsulation using a master key opened to a receiving UE.

Referring to FIG. 4, an analog voice signal input via a microphone of a UE 400 is converted into a digital voice signal by an Analog-to-Digital Converter (A/D) 405. A Voice Codec Encoder (vocoder) (VOC) 410 generates a voice frame including voice data from the digital voice signal using a pre-agreed upon voice codec. The voice frame may be generated in the form of an AMR-NB frame or an AMR-Wide Band (WB) frame according to a predetermined standard of a voice call network. The voice frame is transmitted to a Base Station (BS) 435 via a wireless signal, after being channel-encoded and modulated by a MOdulator-DEModulator (MODEM) 415.

To support the secure voice call, the voice frame is delivered to the MODEM 415 via a secure communication module 425. The secure communication module 425 delivers the voice frame to the MODEM 415 during an unsecure (i.e., normal) voice call, rather than the secure voice call.

Once the UE receives a secure voice call start request from the user via a UI 400, an invoker 420 senses reception of the secure voice call start request and sends an invoke signal for instructing the secure communication module 425 to initiate the secure voice call. The invoker 420 is a module in charge of start of a normal voice call and start of a secure voice call by the user, and may be implemented with, for example, the UI 400. Upon receiving the invoke signal, the secure communication module 425 delivers at least one dedicated frame including an encryption key to be used for the secure voice call, in place of the at least one voice frame delivered from the vocoder 410, to the MODEM 415. The dedicated frame is transmitted to the BS 435 via the MODEM 415.

If an ACK frame is received by a reception module 430 from the counterpart UE in response to the dedicated frame, the secure communication module 425 encrypts the at least one voice frame delivered from the vocoder 410 using the encryption key and delivers the encrypted voice frame to the MODEM 415. The MODEM 415 channel-encodes and modulates the encrypted voice frame and then transmits the voice frame to the BS 435.

FIG. 5 is a block diagram of a secure communication module according to an embodiment of the present invention, in which the secure communication module 425 of a UE, which initiates a secure voice call and transmits an encryption key, is illustrated.

Referring to FIG. 5, an encryption/decryption module 505 receives a voice frame generated by the vocoder 410 and encrypts a payload of the voice frame using a predetermined encryption key. Upon receiving an invoke signal from the invoker 420, an encryption key generator/extractor 510 generates an encryption key in a predetermined manner and provides the encryption key to the encryption/decryption module 505. The encryption key may be generated at random, for example.

A key encapsulator 515 is provided with the encryption key generated by the encryption key generator/extractor 510, and encapsulates, that is, encrypts the encryption key using a predetermined master key 500. The master key 500 may be generated according to a predetermined algorithm. For example, at least one of a public key, an ID, and a phone number of a receiver (that is, the counterpart UE) may be used as the master key 500 according to an algorithm agreed upon in advance with the receiver. In an embodiment of the present invention, a dedicated frame may further include information indicating the master key 500, information for obtaining the master key 500, or information indicating an algorithm used for calculation of the master key 500.

A dedicated frame generator 520 receives the encapsulated encryption key from the key encapsulator 515 and generates one or more dedicated frames including the encapsulated encryption key in their payloads. Each dedicated frame includes a frame type and a payload like a voice frame, and the frame type may be set to a value indicating that the encryption key is included. In an embodiment of the present invention, the dedicated frame may include a pre-agreed word in the payload. The number of generated dedicated frames may be determined according to a length of the encryption key.

A frame coordinator 525 receives the one or more dedicated frames, discards one or more encrypted voice frames delivered from the encryption/decryption module 505, and delivers the dedicated frames, in place of the voice frames, to the MODEM 415. More specifically, the dedicated frames are inserted in place of as many voice frames as the generated dedicated frames. In an embodiment of the present invention, the frame coordinator 525 may repetitively transmit one or more dedicated frames including the encryption key a predetermined number of times. Until the reception module 430 detects an ACK frame after completion of transmission of the dedicated frames, the frame coordinator 525 controls the MODEM 415 to transmit a non-encrypted voice frame generated by the vocoder 410, instead of the encrypted voice frame generated by the encryption/decryption module 505. The non-encrypted voice frame may be delivered from the vocoder 410 directly to the MODEM 415 or from the frame coordinator 525 to the MODEM 415.

In an embodiment of the present invention, the frame coordinator 525 repetitively delivers one or more dedicated frames including the encryption key, until an ACK frame is received from the counterpart UE.

An ACK analyzer 530 senses reception of the ACK frame by the reception module 430 from the counterpart UE, and notifies the frame coordinator 525 of the reception of the ACK frame. Then, the frame coordinator 525 delivers the encrypted voice frames received from the encryption/decryption module 505 to the MODEM 415 which then transmits the encrypted voice frames.

The voice frames received by the reception module 430 after reception of the ACK frame may be delivered to the frame coordinator 525 via the ACK analyzer 530. The frame coordinator 525 delivers the received voice frames to the encryption/decryption module 505 which then decrypts the received voice frames using the encryption key and delivers the decrypted voice frames to the vocoder 410.

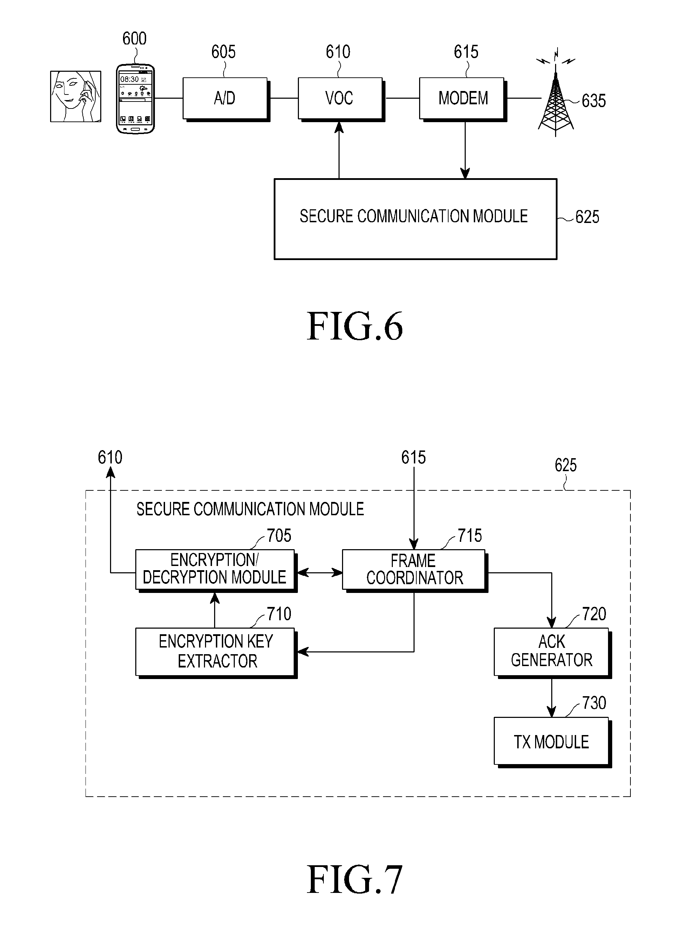

FIG. 6 is a block diagram of a UE for a secure voice call according to an embodiment of the present invention, in which if a counterpart UE initiates a secure voice call, a UE deencapsulates an encryption key provided from the counterpart UE using a public master key.

Referring to FIG. 6, a MODEM 615 performs demodulation and channel decoding with respect to a signal received from a BS 635 to restore a frame transmitted by the counterpart UE. The restored frame is delivered to a secure communication module 625.

If the frame is a dedicated frame including the encryption key, the secure communication module 625 extracts the encryption key from the frame. If the frame is an encrypted voice frame and a previously obtained encryption key exists, the secure communication module 625 decrypts the encrypted voice frame using the encryption key. The voice frame obtained by the decryption has a form of an AMR-NB frame or an AMR-WB frame according to a predetermined standard of a voice call network, and is delivered to a vocoder (VOC) 610. The vocoder 610 decodes the voice frame using the pre-agreed upon voice codec to extract a digital signal including voice data. A Digital-to-Analog Converter (D/A) 605 converts the digital signal into an analog signal for output via a speaker 600 of the UE.

FIG. 7 is a block diagram of a secure communication module according to another embodiment of the present invention, in which the secure communication module 625 of a UE receiving an encryption key for a secure voice call is illustrated.

Referring to FIG. 7, a frame coordinator 715 receives a frame received from a counterpart UE from the MODEM 615 and determines whether the received frame includes voice data or an encryption key for a secure voice call. In an embodiment of the present invention, if a frame type included in the received frame has a predetermined value, the frame coordinator 715 determines that the received frame is a dedicated frame including the encryption key for the secure voice call, and if the frame type has a value indicating a voice codec, and the frame coordinator 715 determines that the received frame is a voice frame. In an embodiment of the present invention, if a pre-agreed upon word is detected in a payload of the received frame, the frame coordinator 715 determines that the received frame is a dedicated frame. In an embodiment of the present invention, if the same frame is received repetitively a predetermined number of times, the frame coordinator 715 determines that the received frame is a dedicated frame.

If determining that the received frame is a dedicated frame, the frame coordinator 715 delivers the dedicated frame to an encryption key extractor 710 and instructs an ACK generator 720 to generate and transmit an ACK frame. The frame coordinator 715 stores information indicating reception of the dedicated frame, that is, obtaining of the encryption key for the secure voice call, to allow encrypted voice frames, which are to be received from the MODEM 615 subsequently, to be delivered to an encryption/decryption module 705.

The ACK generator 720 generates the ACK frame according to the instruction of the frame coordinator 715 and delivers the ACK frame to the counterpart UE via a transmission module 730. In an embodiment of the present invention, the ACK frame includes a frame type and a payload, like a voice frame, in which the frame type is set to a value indicating that ACK is included in the payload and the payload includes a value indicating ACK (for example, "0").

The encryption key extractor 710 deencapsulates the payload of the dedicated frame delivered from the frame coordinator 715 using a previously known master key to extract the encryption key to be used for the secure voice call, and delivers the extracted encryption key to the encryption/decryption module 705. The master key may be generated according to a predetermined algorithm; for example, at least one of a public key, an ID, and a phone number of a transmitter (that is, a counterpart UE) may be used as a master key according to an algorithm agreed upon in advance with the transmitter. In an embodiment of the present invention, the encryption key extractor 710 determines the master key based on information obtained from the dedicated frame and extracts the encryption key using the determined master key.

Even when it is determined that the received frame is a dedicated frame, the frame coordinator 715 may ignore the dedicated frame, if confirming information indicating that the encryption key for the secure voice call has already been obtained.

Even when it is determined that the received frame delivered from the MODEM 615 is a voice frame, unless confirming the information indicating that the encryption key for the secure voice call has been obtained, the frame coordinator 715 determines that the voice frame has not been encrypted, and then controls the MODEM 615 to deliver the voice frame directly to the vocoder 610. The voice frame may be delivered from the MODEM 615 directly to the vocoder 610 or may be delivered to the vocoder 610 via the frame coordinator 715 and the encryption/decryption module 705.

If determining that the received frame delivered from the MODEM 615 is the voice frame and confirming the information indicating that the encryption key for the secure voice call has been obtained, the frame coordinator 715 determines that the voice frame is an encrypted voice frame including encrypted voice data, and delivers the encrypted voice frame to the encryption/decryption module 705. The encryption/decryption module 705 then decrypts the voice frame delivered from the frame coordinator 715, using the encryption key delivered from the encryption key extractor 710.

The frame coordinator 715 controls the encryption/decryption module 705 to encrypt and transmit the voice frame generated by the vocoder 610 after the encryption key for the secure voice call is obtained.

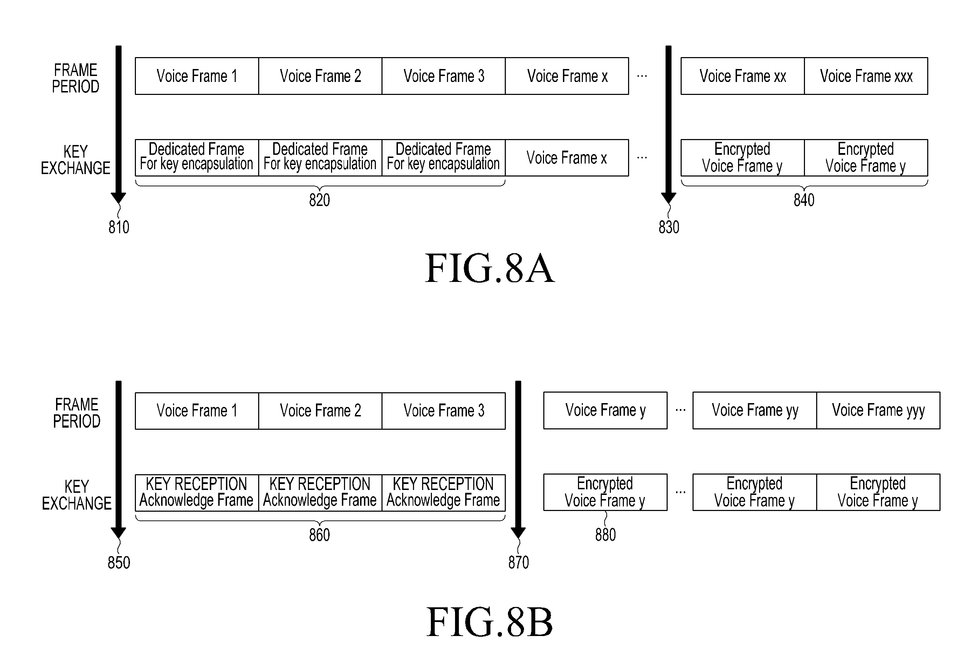

FIGs. 8A and 8B illustrate a frame sequence for a secure voice call according to an embodiment of the present invention.

Referring to FIG. 8A, a first UE initiates a secure voice call in reference numeral 810, and transmits dedicated frames including an encryption key as indicated by reference numeral 820 to a second UE. In this case, one or more dedicated frames including one encryption key may be transmitted once, or the one or more dedicated frames may be transmitted repetitively a predetermined number of times. If an ACK frame has not been received until completion of transmission of the dedicated frames, the first UE may transmit non-encrypted voice frames until reception of the ACK frame. The first UE confirms reception of the ACK frame from the second UE in reference numeral 830, and starts transmitting voice frames encrypted using the encryption key as indicated by reference numeral 840.

Referring to FIG. 8B, the second UE receives a dedicated frame from the first UE and extracts an encryption key from the dedicated frame in reference numeral 850. If extraction of the encryption key is successful, the second UE transmits an ACK frame indicating reception of the encryption key as indicated by reference numeral 860 to the first UE. The ACK frame may be transmitted once, or may be transmitted repetitively a predetermined number of times. If transmission of the ACK frame is completed in reference numeral 870, the second UE starts transmitting voice frames encrypted using the encryption key as indicated by reference numeral 880 to the first UE.

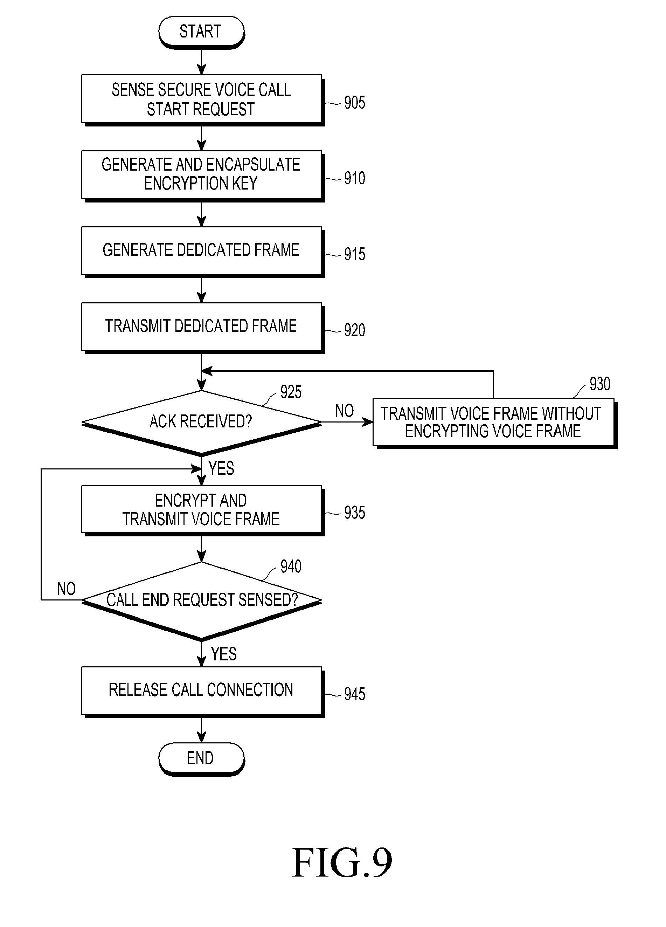

FIG. 9 is a flowchart of a method of a UE transmitting an encryption key according to an embodiment of the present invention.

Referring to FIG. 9, in step 905, a UE receives a secure voice call start request from a user, at the start of or during an unsecure voice call. In step 910, the UE generates an encryption key according to a predetermined algorithm and encapsulates the encryption key using a pre-agreed upon master key. In step 915, the UE generates one or more dedicated frames including the encapsulated encryption key in their payloads. The dedicated frames may further include information associated with the master key, together with the encapsulated encryption key. In step 920, the UE transmits the one or more dedicated frames to a counterpart UE once or repetitively a predetermined number of times. The dedicated frames are transmitted in place of voice frames generated in a vocoder.

In step 925, the UE monitors whether an ACK frame indicating successful reception of the encryption key is received from the counterpart UE. In step 930, the UE transmits voice frames generated by the vocoder without encrypting the voice frames, until reception of the ACK frame. Upon receiving the ACK frame, the UE encrypts the voice frames generated by the vocoder using the encryption key, transmits the encrypted voice frames to the counterpart UE, and decrypts the voice frames received from the counterpart UE using the encryption key in step 935.

During the secure voice call, upon sensing a call end request from the user or the counterpart UE in step 940, the UE releases call connection and ends the secure voice call in step 945. In an embodiment of the present invention, if a call switch request for switching from a secure voice call to a normal voice call is input from the user during the secure voice call, the UE stops encryption of voice frames and transmits non-encrypted voice frames.

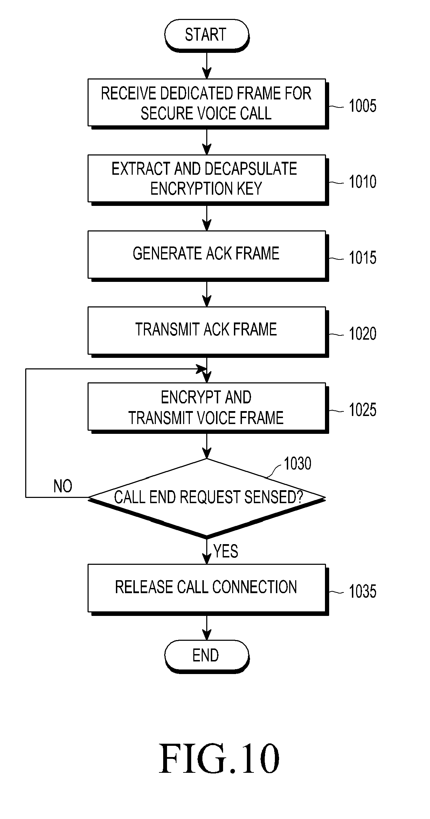

FIG. 10 is a flowchart of a method of a UE receiving an encryption key according to an embodiment of the present invention.

Referring to FIG. 10, in step 1005, a UE receives one or more dedicated frames including an encapsulated encryption key for a secure voice call from a counterpart UE at the start of or during a voice call. In step 1010, the UE deencapsulates payloads of the dedicated frames using a pre-agreed upon master key to extract the encryption key. The master key may be determined according to an algorithm agreed upon in advance with the counterpart UE or may be obtained based on information included in the dedicated frames.

The UE generates an ACK frame indicating successfully obtaining the encryption key in step 1015, and transmits the ACK frame to the counterpart UE once or repetitively a predetermined number of times in step 1020. The ACK frame is transmitted in place of one or more voice frames generated in the vocoder.

After transmitting the ACK frame, the UE encrypts the voice frames generated in the vocoder using the encryption key, transmits the encrypted voice frames to the counterpart UE, and decrypts voice frames received from the counterpart UE using the encryption key, in step 1025.

Upon sensing a call end request from the user or the counterpart UE during the secure voice call in step 1030, the UE releases the call connection and ends the secure voice call in step 1035. In an embodiment of the present invention, if switching from the secure voice call to the normal voice call is requested by the user during the secure voice call, the UE stops encrypting voice frames and transmits unencrypted voice frames.

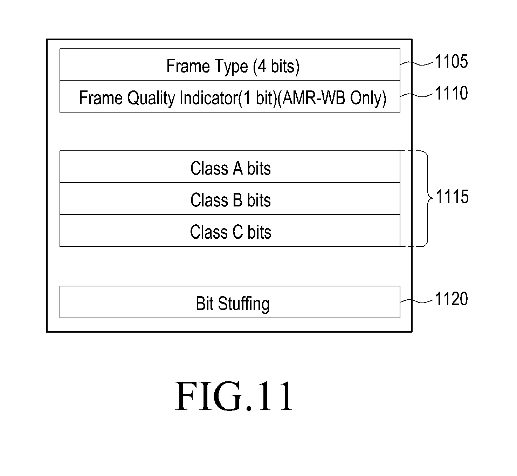

FIG. 11 illustrates a frame structure according to an embodiment of the present invention, in which a frame includes a frame type 1105, a frame quality indicator 1110, a payload 1115, and a bit stuffing part 1120. The frame type 1105 indicates a voice codec, and the frame quality indicator 1110 is included for an AMR-WB frame. The payload 1115 may include voice data, an encryption key, or an ACK. If the encryption key is included in the payload 1115, a pre-agreed upon word is inserted into a front part of the payload 1115. In an embodiment of the present invention, the frame type 1105 may be set to a value indicating that the encryption key or ACK is included in the payload 1115.

Hereinafter, a description is provided of a two-pass-based key transmission method in which UEs performing a voice call transmit their keys to each other for sharing the keys, and determine an encryption key to be used in a secure voice call based on the shared keys.

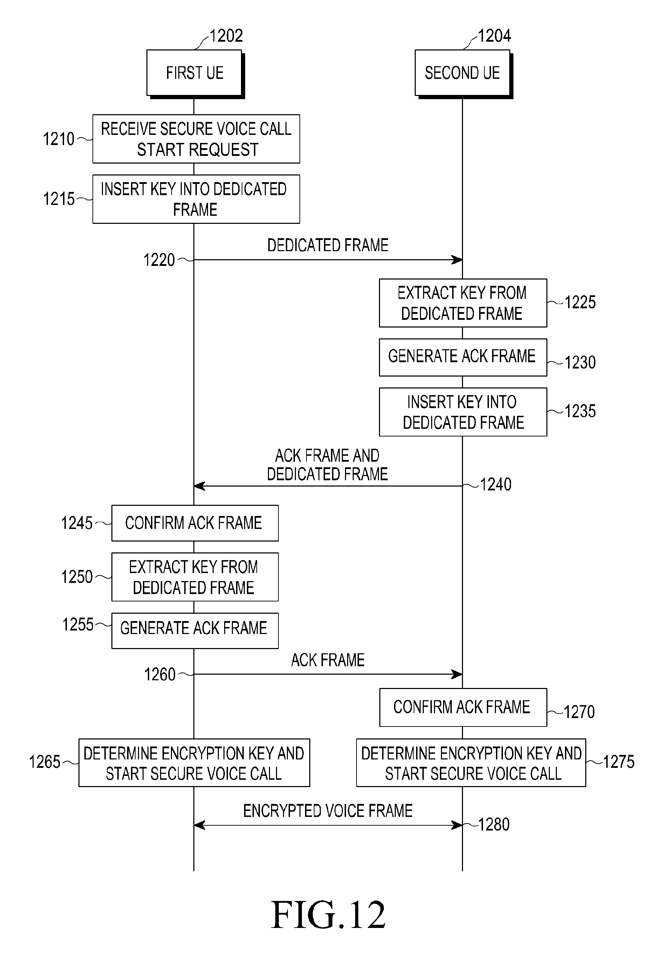

FIG. 12 is a flowchart of a secure voice call method according to another embodiment of the present invention, in which a first UE 1202 initiates a secure voice call and a second UE 1204 desires to or is performing a voice call with the first UE 1202.

Referring to FIG. 12, the first UE 1202 receives a secure voice call start request from a user in step 1210. In an embodiment of the present invention, the user may input a request for starting a voice call based on a secure voice call via a UI of the first UE 1202. In an embodiment of the present invention, the user may request switching to a secure voice call via the UI of the first UE 1202 during the voice call.

In step 1215, the first UE 1202 generates a sender key for the secure voice call. In an embodiment of the present invention, the sender key is generated at random. In operation 1215, the first UE 1202 generates a dedicated frame including the sender key. If the size of the sender key is greater than a payload size of one frame, one or more dedicated frames may be generated.

The dedicated frame has the same frame format as a voice frame used for a voice call, and includes at least a part of an encapsulated encryption key, in place of voice data, in its payload. For example, if the size of payload data is 244 bits and the sender key is of 1024 bits, at least five frames are required for delivery of the sender key.

In step 1220, the first UE 1202 transmits the generated one or more dedicated frames to the second UE 1204. The dedicated frames are transmitted in place of voice frames via a pre-allocated voice channel. In an embodiment of the present invention, the first UE 1202 transmits the one or more dedicated frames repetitively a predetermined number of times.

In step 1225, the second UE 1204 receives the one or more dedicated frames and extracts the sender key from the received dedicated frames. In step 1230, the second UE 1204 generates an ACK frame to indicate that the sender key is obtained. In step 1235, the second UE 1204 generates a receiver key for a secure voice call and generates one or more dedicated frames including the receiver key. In an embodiment of the present invention, the receiver key is generated at random.

In step 1240, the ACK frame and the dedicated frames including the receiver key are transmitted in place of voice frames via a pre-allocated voice channel. For stable transmission, the ACK frame and the dedicated frames are transmitted repetitively a predetermined number of times.

The first UE 1202 confirms that at least one frame received from the second UE 1204 is an ACK frame in step 1245, and extracts a receiver key from at least one of the dedicated frames in step 1250. The first UE 1202 generates an ACK frame indicating that the receiver key is obtained in step 1255, and transmits the ACK frame in place of a voice frame via a pre-allocated voice channel in step 1260. Likewise, the ACK frame may be transmitted repetitively a predetermined number of times.

In step 1265, the first UE 1202 determines an encryption key to be used for a secure voice call according to a pre-agreed upon algorithm using the sender key and the receiver key. In step 1280, the first UE 1202 encrypts voice frames using the encryption key and transmits the encrypted voice frames. Similarly, the second UE 1204 confirms that the ACK frame has been received from the first UE 1202 in step 1270, and determines the encryption key for the secure voice call using the sender key and the receiver key in step 1275. The second UE 1204 calculates the encryption key using the same algorithm used in the first UE 1202. In step 1280, the second UE 1204 encrypts voice frames using the encryption key and transmits the encrypted voice frames. In this way, the secure voice call between the UEs 1202 and 1204 is performed.

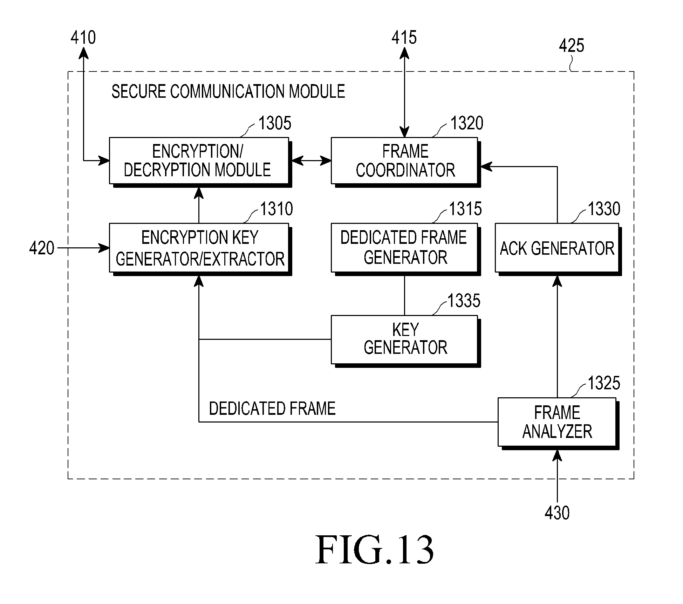

The structure of the UE for the secure voice call is the same as illustrated in FIGs. 4 and 6. To implement the embodiment of FIG. 12, the secure communication module 425 of FIG. 4 may be configured as illustrated in FIG. 13.

FIG. 13 is a block diagram of a secure communication module 425 according to an embodiment of the present invention.

Referring to FIG. 13, an encryption/decryption module 1305 receives a voice frame generated by the vocoder 410 and encrypts a payload of the voice frame by using a predetermined encryption key. Upon receiving an invoke signal from the invoker 420, an encryption key generator/extractor 1310 generates an encryption key for use in the secure voice call and provides the generated encryption key to the encryption/decryption module 1305. The encryption key is generated based on a key (that is, a sender key) generated in a key generator 1335 and a key (that is, a receiver key) of a counterpart UE extracted from a dedicated frame received by the reception module 430 and delivered via a frame analyzer 1325. The key generator 1335 generates its key according to a predetermined method and provides the generated key to the encryption key generator/extractor 1310, and delivers the generated key to a dedicated frame generator 1315.

The dedicated frame generator 1315 receives the key from the key generator 1335 and generates one or more dedicated frames including the key in their payloads. Each dedicated frame includes a frame type and a payload like a voice frame, and the frame type may be set to a value indicating that the key is included. In an embodiment of the present invention, the dedicated frame may include a pre-agreed upon word in the payload. The number of generated dedicated frames may be determined according to a length of the key.

A frame coordinator 1320 receives the one or more dedicated frames, discards one or more encrypted voice frames delivered from the encryption/decryption module 1305, and delivers the dedicated frames, in place of the discarded voice frames, to the MODEM 415. More specifically, the dedicated frames are inserted in place of as many voice frames as the generated dedicated frames. In an embodiment, the frame coordinator 1320 may repetitively deliver the one or more dedicated frames including the key a predetermined number of times. Until an ACK frame is detected by the reception module 430 after completion of transmission of the dedicated frames, the frame coordinator 1320 controls the MODEM 415 to transmit an unencrypted voice frame generated by the vocoder 410, instead of an encrypted voice frame generated by the encryption/decryption module 1305. The unencrypted voice frame may be delivered from the vocoder 410 directly to the MODEM 415 or from the frame coordinator 1320 to the MODEM 415.

In an embodiment of the present invention, the frame coordinator 1320 repetitively delivers one or more dedicated frames including an encryption key, until an ACK frame is received from a counterpart UE.

The frame analyzer 1325 analyzes a frame type of a frame received by the reception module 430 from the counterpart UE. In an embodiment of the present invention, the frame analyzer 1325 determines that the received frame is a dedicated frame including an encryption key for a secure voice call, if the frame type included in the received frame has a predetermined value; if the frame type has a value indicating a voice codec, the frame analyzer 1325 determines that the received frame is a voice frame. In an embodiment of the present invention, the frame analyzer 1325 determines that the received frame is a dedicated frame, if a pre-agreed word is detected from a payload of the received frame. In an embodiment of the present invention, the frame analyzer 1325 determines that the received frame is a dedicated frame, if the same frame is received repetitively a predetermined number of times.

If determining that the received frame is a dedicated frame including a key of the counterpart UE, the frame analyzer 1325 delivers the dedicated frame to the encryption key generator/extractor 1310 and notifies an ACK generator 1330 of reception of the dedicated frame. In response to reception of the dedicated frame, the ACK generator 1330 generates an ACK frame indicating successful reception of the key and delivers the generated ACK frame to the frame coordinator 1320. The frame coordinator 1320 then delivers the ACK frame to the modem 415 which in turn transmits the ACK frame.

After transmission of the ACK frame, the frame coordinator 1320 delivers the encrypted voice frames delivered from the encryption/decryption module 1305 to the MODEM 415 which then transmits the encrypted voice frames. Voice frames received by the reception module 430 after reception of the ACK frame are delivered to the frame coordinator 1320 by the frame analyzer 1325. The frame coordinator 1320 delivers the received voice frames to the encryption/decryption module 1305 which then decrypts the received voice frames using the encryption key and delivers the decrypted voice frames to the vocoder 410.

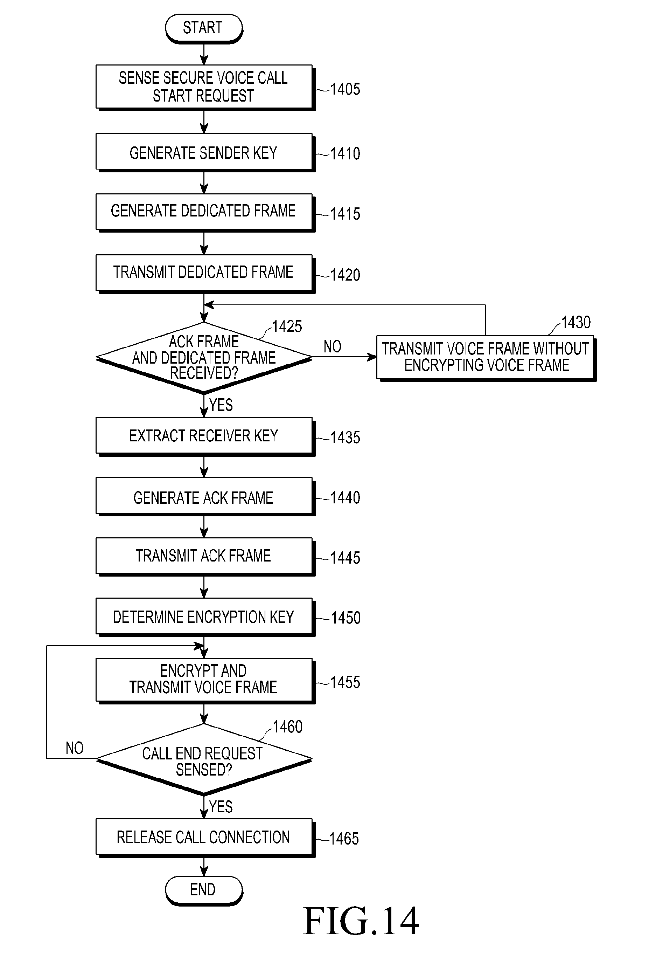

FIG. 14 is a flowchart of a method of a UE initiating a secure call according to an embodiment of the present invention.

Referring to FIG. 14, a UE receives a secure voice call start request from a user, at the start of or during an unsecure voice call in step 1405, and generates its key (that is, a sender key) according to a predetermined algorithm in step 1410. In step 1415, the UE generates one or more dedicated frames including the sender key in their payloads. In step 1420, the UE transmits the one or more dedicated frames to the counterpart UE once or repetitively a predetermined number of times. The dedicated frames are transmitted in place of voice frames generated by the vocoder.

In step 1425, the UE monitors whether an ACK frame indicating successful reception of the sender key and one or more dedicated frames including a key (that is, a receiver key) of the counterpart UE are received from the counterpart UE. In step 1430, the UE transmits voice frames generated by the vocoder without encrypting the voice frames, until the ACK frame and the dedicated frames are received. Upon receiving the ACK frame and the dedicated frames, the UE extracts the receiver key of the counterpart UE from the dedicated frames in step 1435. The UE generates an ACK frame indicating that the receiver key has been successfully obtained, in step 1440. In step 1445, the UE transmits the ACK frame to the counterpart UE once or repetitively a predetermined number of times. The ACK frame is transmitted in place of one or more voice frames generated by the vocoder.

After transmitting the ACK frame, the UE determines an encryption key based on the sender key and the receiver key according to a predetermined algorithm in step 1450. In step 1455, the UE encrypts the voice frames generated by the vocoder using the encryption key, transmits the encrypted voice frames to the counterpart UE, and decrypts the voice frames received from the counterpart UE using the encryption key.

Upon sensing a call end request from the user or the counterpart UE during the secure voice call in step 1460, the UE releases the call connection and ends the secure voice call in step 1465. In an embodiment of the present invention, if switching from the secure voice call to the normal voice call is requested by the user during the secure voice call, the UE stops encrypting voice frames and transmits unencrypted voice frames.

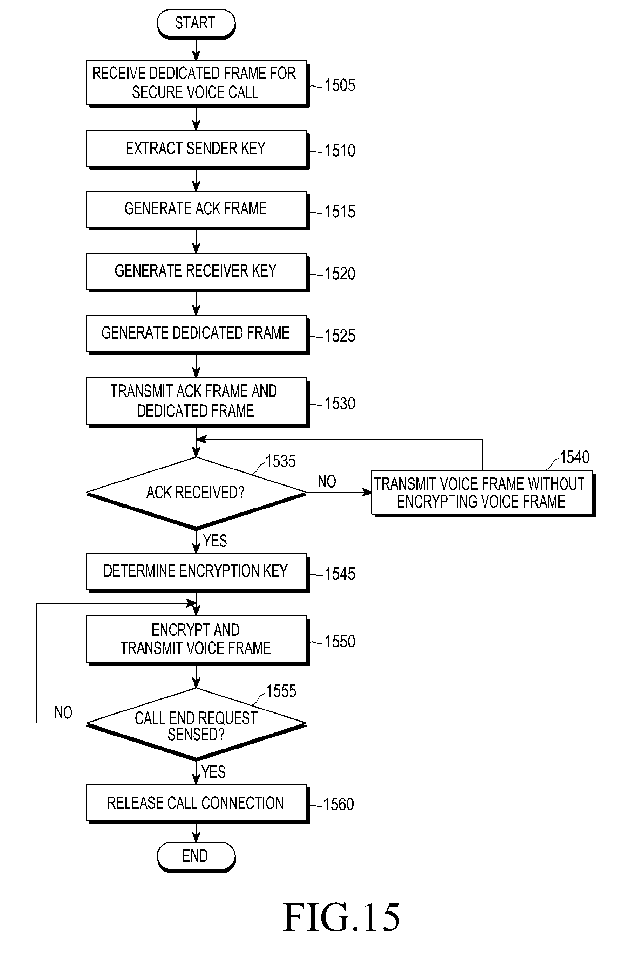

FIG. 15 is a flowchart of a method of a UE receiving a secure voice call start request from a counterpart UE according to an embodiment of the present invention.

Referring to FIG. 15, in step 1505, the UE receives one or more dedicated frames including a sender key for a secure voice call from a counterpart UE at the start of or during an unsecure voice call. The UE extracts the sender key from payloads of the dedicated frames in step 1510, and generates an ACK frame indicating successful reception of the sender key in step 1515. The UE generates its key (that is, a receiver key) according to a predetermined algorithm in step 1520, and generates one or more dedicated frames including the receiver key in their payloads in step 1525. In step 1530, the UE transmits the ACK frame and the dedicated frames to the counterpart UE once or repetitively a predetermined number of times. The ACK frame and the dedicated frames are transmitted in place of voice frames generated by the vocoder.

In step 1535, the UE monitors whether an ACK frame indicating successful reception of the receiver key is received from the counterpart UE. In step 1540, the UE transmits voice frames generated by the vocoder without encrypting the voice frames until reception of the ACK frame. Upon receiving the ACK frame, the UE determines an encryption key for use in the secure voice call based on the sender key and the receiver key according to a pre-agreed upon algorithm in step 1545.

In step 1550, the UE encrypts the voice frames generated by the vocoder by using the encryption key, transmits the encrypted voice frames to the counterpart UE, and decrypts the voice frames received from the counterpart UE by using the encryption key.

Upon sensing a call end request from the user or the counterpart UE during the secure voice call in step 1555, the UE releases the call connection and ends the secure voice call in step 1560. In an embodiment of the present invention, if switching from the secure voice call to the normal voice call is requested from the user during the secure voice call, the UE stops encrypting voice frames and transmits unencrypted voice frames.

Other effects that may be obtained or expected from an embodiment of the present invention are explicitly or implicitly disclosed in the detailed description of the embodiment of the present invention. For example, various effects expected from an embodiment of the present invention have been disclosed in the detailed description of the present invention.

The embodiments of the present invention provided in the present specification and the drawings merely provide examples to easily describe the technical contents of the present invention and to facilitate understanding of the present invention, rather than to limit the scope of an embodiment of the present invention. Thus, the scope of the present invention should be construed as including any changes or modifications derived from the technical scope and spirit of the present invention as defined in the claims, and their equivalents.

## Claims

1. A method of performing a secure voice call, the method comprising:
generating an encryption key to be used in the secure voice call;
encapsulating the encryption key using a pre-agreed upon master key;
generating at least one dedicated frame comprising the encapsulated encryption key;
transmitting the at least one dedicated frame in place of at least one voice frame generated by a vocoder to a counterpart User Equipment (UE);
receiving an Acknowledgement (ACK) frame indicating successful reception of the encryption key from the counterpart UE;
encrypting the at least one voice frame generated by the vocoder using the encryption key and transmitting the encrypted at least one voice frame to the counterpart UE, after receiving the ACK frame; and
decrypting voice frames received from the counterpart UE using the encryption key, after receiving the ACK frame.

2. The method of claim 1, wherein the master key is determined by a Public Key Infrastructure (PKI), an identifier (ID), or a phone number of the counterpart UE.

3. The method of claim 1, wherein the at least one dedicated frame is repetitively transmitted a pre-agreed upon number of times or in a predetermined time limit.

4. The method of claim 1, further comprising transmitting the at least one voice frame generated by the vocoder to the counterpart UE without encrypting the at least one voice frame, until receiving the ACK frame after transmitting the at least one dedicated frame.

5. A method of performing a secure voice call, the method comprising:
receiving at least one dedicated frame comprising an encapsulated encryption key for a secure voice call from a counterpart User Equipment (UE);
extracting the encryption key by deencapsulating payloads of the at least one dedicated frame using a pre-agreed upon master key;
transmitting an Acknowledgement (ACK) frame indicating successful reception of the encryption key in place of at least one voice frame generated by a vocoder to the counterpart UE;
encrypting the at least one voice frame generated by the vocoder using the encryption key and transmitting the at least one encrypted voice frame to the counterpart UE, after transmitting the ACK frame; and
decrypting voice frames received from the counterpart UE using the encryption key, after transmitting the ACK frame.

6. The method of claim 5, wherein the master key is determined by a Public Key Infrastructure (PKI), an identifier (ID), or a phone number of the counterpart UE.

7. The method of claim 5, wherein the at least one dedicated frame is repetitively transmitted a pre-agreed upon number of times or in a predetermined time limit.

8. The method of claim 5, further comprising transmitting the at least one voice frame generated by the vocoder to the counterpart UE without encrypting the at least one voice frame, until transmitting the ACK frame after receiving the at least one dedicated frame.

9. A User Equipment (UE) being configured to perform the method of one of claims 1 to 8.

10. A method of performing a secure voice call, the method comprising:
generating a sender key for a secure voice call;
generating at least one dedicated frame comprising the sender key;
transmitting the at least one dedicated frame in place of at least one voice frame generated by a vocoder to a counterpart User Equipment (UE);
receiving, from the counterpart UE, an Acknowledgement (ACK) frame indicating successful reception of the encryption key and at least one dedicated frame comprising a receiver key generated by the counterpart UE;
determining an encryption key to be used for the secure voice call based on the sender key and the receiver key;
transmitting an ACK frame indicating successful reception of the receiver key in place of at least one voice frame generated by the vocoder to the counterpart UE;
encrypting the at least one voice frame generated by the vocoder using the encryption key and transmitting the encrypted at least one voice frame to the counterpart UE, after transmitting the ACK frame; and
decrypting voice frames received from the counterpart UE using the encryption key, after transmitting the ACK frame.

11. The method of claim 10, further comprising transmitting the at least one voice frame generated by the vocoder without encrypting the generated at least one voice frame, until transmitting the ACK frame after transmitting the at least one dedicated frame comprising the sender key.

12. A method of performing a secure voice call, the method comprising:
receiving at least one dedicated frame comprising a sender key for a secure voice call from a counterpart User Equipment (UE);
generating a receiver key for the secure voice call;
generating at least one dedicated frame comprising the receiver key;
transmitting an Acknowledgement (ACK) frame indicating successful reception of the sender key and at least one dedicated frame comprising the receiver key, in place of at least one voice frame generated by a vocoder, to the counterpart UE;
receiving an ACK frame indicating successful reception of the receiver key from the counterpart UE;
determining an encryption key to be used for the secure voice call based on the sender key and the receiver key;
encrypting the at least one voice frame generated by the vocoder using the encryption key and transmitting the encrypted at least one voice frame to the counterpart UE, after receiving the ACK frame; and
decrypting voice frames received from the counterpart UE using the encryption key, after receiving the ACK frame.

13. The method of claim 10 or 12, wherein the encryption key is computed based on the sender key and the receiver key using an algorithm pre-agreed upon with the counterpart UE.

14. The method of claim 10 or 12, wherein the at least one dedicated frame comprising the receiver key is repetitively transmitted a pre-agreed number of times or in a predetermined time limit.

15. The method of claim 12, further comprising transmitting the at least one voice frame generated by the vocoder without encrypting the generated at least one voice frame, until receiving the ACK frame after receiving the at least one dedicated frame comprising the sender key.

16. A User Equipment (UE) being configured to perform the method of one of claims 10 to 15.
